# FASCICULE DE BREVET EUROPEEN

(11) **EP 2 732 736 B1**
(45) Date de publication et mention de la délivrance du brevet: **09.09.2015**
(21) Numéro de dépôt: 13192103.3
(22) Date de dépôt: 08.11.2013
(51) Int. Cl.: A47J 27/08

(54) **Appareil de cuisson d'aliments sous pression comportant un organe de commande amélioré**
Druckkochgerät mit verbesserter Bedienungsvorrichtung
Appliance for cooking food under pressure comprising an improved control device

(30) Priorité: 16.11.2012 FR 1260938
(43) Date de publication de la demande: 21.05.2014
(73) Titulaire: SEB S.A., 69130 Ecully (FR)
(72) Inventeur: Rhetat, Eric, 21000 Dijon (FR)
(74) Mandataire: Martin, Didier Roland Valéry

(56) Documents cités:
- EP-A1- 1 547 497
- WO-A1-2012/045979
- DE-A1-102010 026 147
- DE-U1- 20 201 624

## Description

La présente invention se rapporte au domaine technique général des appareils de cuisson d'aliments sous pression, et en particulier aux appareils domestiques du genre autocuiseurs, comprenant une cuve et un couvercle destiné à être verrouillé sur la cuve par l'intermédiaire d'un organe de commande destiné à être actionné manuellement par l'utilisateur pour former une enceinte de cuisson sensiblement étanche, de tels appareils étant destinés à assurer la cuisson sous pression de vapeur des aliments contenus dans l'enceinte de cuisson.

La présente invention concerne plus particulièrement un appareil de cuisson d'aliments sous pression comprenant :
- une cuve et un couvercle susceptible de fermer la cuve de manière étanche pour former une enceinte de cuisson,
- un organe de commande du verrouillage/déverrouillage du couvercle sur la cuve destiné à être actionné manuellement par un utilisateur, ledit organe étant monté mobile à rotation sur le couvercle par l'intermédiaire d'au moins un axe de rotation selon une course s'étendant entre au moins une position de déverrouillage et une position de verrouillage, ledit organe de commande étant en liaison cinématique, par l'intermédiaire de moyens d'engagement solidaires de l'axe de rotation, avec un mécanisme de verrouillage monté mobile sur le couvercle pour déplacer ledit mécanisme de verrouillage dans des positions de déverrouillage et de verrouillage correspondant à celles de l'organe de commande en vue d'assurer le verrouillage/déverrouillage du couvercle,

Les appareils de cuisson d'aliments sous pression sont déjà connus et comprennent une cuve métallique sur laquelle est rapportée de façon étanche, par exemple par l'intermédiaire d'un joint, un couvercle, de manière à constituer une enceinte de cuisson sensiblement étanche.

Le couvercle est destiné à être verrouillé sur la cuve par l'intermédiaire d'un mécanisme de verrouillage lequel est sous la commande d'un organe de commande destiné à être actionné manuellement par un utilisateur de telle sorte que le mécanisme de verrouillage puisse occuper une position de verrouillage du couvercle sur la cuve et une position de déverrouillage dans laquelle le couvercle peut être ôté de la cuve.

Il existe différents types de mécanismes de verrouillage bien connus dans l'art antérieur, tels des mécanismes mettant en oeuvre une pluralité de mâchoires montées mobiles radialement sur le couvercle et qui viennent enserrer le bord de cuve en position de verrouillage.

On connaît également des mécanismes de verrouillage dit *à « segments »* formés par exemple par une ou plusieurs barres ou barrettes montées mobiles radialement sur le couvercle et venant s'engager dans des orifices ménagés dans la cuve pour assurer le verrouillage.

Il existe enfin d'autres mécanismes de verrouillage mettant par exemple en oeuvre un étrier mobile en rotation, sans que cette liste soit limitative.

La commande du déplacement du mécanisme de verrouillage entre sa position de verrouillage et sa position de déverrouillage est assurée par un organe de commande monté sur le couvercle et destiné à être actionné par l'utilisateur pour qu'il puisse commander le mécanisme de verrouillage. Grâce à cet organe de commande, l'utilisateur peut amener les pièces de verrouillage, du genre mâchoires ou segments par exemple, dans leur position de verrouillage et/ou de déverrouillage, par le biais d'un mécanisme de transmission interposé entre l'organe de commande et les pièces de verrouillage / déverrouillage.

Selon un dispositif connu, l'organe de commande est monté mobile à une rotation sur le couvercle par l'intermédiaire d'au moins un axe de rotation selon une course s'étendant au moins entre une position de déverrouillage et une position de verrouillage. L'organe de commande est en liaison cinématique, par l'intermédiaire de moyens d'engagement solidaires de l'axe de rotation dudit organe de commande, avec un mécanisme de verrouillage qui est lui-même monté mobile sur le couvercle, l'organe de commande permettant ainsi de déplacer le mécanisme de verrouillage dans des positions de verrouillage et de déverrouillage correspondant aux positions de l'organe de commande en vue d'assurer le verrouillage/déverrouillage du couvercle.

Grâce à ce dispositif, l'utilisateur peut commander le verrouillage/déverrouillage du couvercle sur la cuve en déplaçant manuellement l'organe de commande entre sa position de déverrouillage et sa position de verrouillage. Selon ce dispositif connu, les moyens d'engagement sont solidaires de l'axe de rotation de l'organe de commande et viennent engager et déplacer le mécanisme de verrouillage lorsque l'organe de commande passe de sa position de verrouillage à sa position de déverrouillage. Selon ce dispositif connu, le verrouillage de l'appareil est obtenu par action d'une zone de la partie de préhension de l'organe de commande lui-même sur des butées situées sur le couvercle et en relation avec le mécanisme de verrouillage de telle sorte que lors du contact de l'organe de verrouillage avec lesdites butées, le mécanisme de verrouillage est enclenché immédiatement.

Ce dispositif connu donne globalement satisfaction mais souffre néanmoins de différents inconvénients. En premier lieu, il nécessite la présence de butées sur la partie extérieure du couvercle ce qui d'une part complique la fabrication même du couvercle et son montage, et d'autre part conduit à créer des zones présentant des contours creux et des orifices qui ont tendance à se salir et s'obstruer, de telles zones n'étant pas facilement nettoyable en totalité. En second lieu, ce dispositif implique de la part de l'utilisateur une certaine dextérité dans la mesure où la partie de l'organe de commande qui est active pour déclencher le verrouillage est également une zone de préemption pour l'utilisateur de telle sorte que le maniement de l'organe de commande nécessite une certaine dextérité et une certaine attention.

En dernier lieu, il s'avère que la présence de butées sur le couvercle même nuit, d'une manière générale, à l'esthétique de l'appareil et induit des contraintes supplémentaires en matière de conception.

Les objets assignés à l'invention visent par conséquent à porter remède aux différents inconvénients énumérés précédemment, et à proposer un nouvel appareil de cuisson d'aliments sous pression dont la commande du verrouillage/déverrouillage est particulièrement simple, efficace et facile à manipuler.

Un autre objet de l'invention vise à proposer un nouvel appareil de cuisson d'aliments sous pression dont la commande du verrouillage/déverrouillage est particulièrement robuste.

Un autre objet de l'invention vise à proposer un nouvel appareil de cuisson d'aliments sous pression dont la commande du verrouillage/déverrouillage est particulièrement bien équilibrée sur le plan cinématique et de montage simplifié.

Les objets assignés à l'invention sont atteints à l'aide d'un appareil de cuisson d'aliments sous pression comprenant :
- une cuve et un couvercle susceptible de fermer la cuve de manière étanche pour former une enceinte de cuisson,
- un organe de commande du verrouillage/déverrouillage du couvercle sur la cuve destiné à être actionné manuellement par un utilisateur, ledit organe étant monté mobile à rotation sur le couvercle par l'intermédiaire d'au moins un axe de rotation selon une course s'étendant entre au moins une position de déverrouillage et une position de verrouillage, ledit organe de commande étant en liaison cinématique, par l'intermédiaire de moyens d'engagement solidaires de l'axe de rotation, avec un mécanisme de verrouillage monté mobile sur le couvercle pour déplacer ledit mécanisme de verrouillage dans des positions de déverrouillage et de verrouillage correspondant à celles de l'organe de commande en vue d'assurer le verrouillage/déverrouillage du couvercle, caractérisé en ce que :
- le mécanisme de verrouillage comporte des moyens de réception aptes à coopérer avec des moyens d'engagement de telle manière que lors du déplacement de l'organe de commande de sa position de verrouillage jusqu'à sa position de déverrouillage et inversement, les moyens d'engagement provoquent le déplacement correspondant du mécanisme de verrouillage de sa position de verrouillage jusqu'à sa position de déverrouillage et inversement
- et en ce que les moyens d'engagement sont situés au même endroit sur l'organe de commande.

D'autres particularités et avantages de l'invention apparaîtront et ressortiront plus en détails à la lecture de la description qui suit, en référence aux dessins annexés, donnés à titre purement illustratif et non limitatif, dans lesquels :
- La figure 1 illustre, selon une vue en perspective, un appareil de cuisson d'aliments conforme à l'invention en position de verrouillage, l'organe de commande étant en position de verrouillage et rabattu sur le couvercle.
- La figure 2 illustre selon une vue en perspective de dessus et partiellement arrachée, un détail de réalisation de l'invention.
- La figure 3 illustre selon une vue partielle de dessus arrachée, un détail de réalisation du mécanisme de verrouillage selon l'invention.
- La figure 4 illustre selon une vue en perspective partielle un détail de réalisation de l'organe de commande selon l'invention.
- La figure 5 illustre selon une vue latérale une vue similaire à celle de la figure 4.
- Les figures 6 et 7 illustrent respectivement, selon une vue latérale et selon une vue de dessous, un dispositif conforme à l'invention dans lequel l'organe de commande est en position de déverrouillage.
- Les figures 8 et 9 illustrent respectivement, selon une vue latérale et une vue de dessous, un dispositif conforme à l'invention dans lequel l'organe de commande est dans une position intermédiaire.
- Les figures 10 et 11 illustrent respectivement selon une vue latérale et une vue de dessous, un dispositif conforme à l'invention dans lequel l'organe de commande est dans sa position de verrouillage et rabattu sur le couvercle.

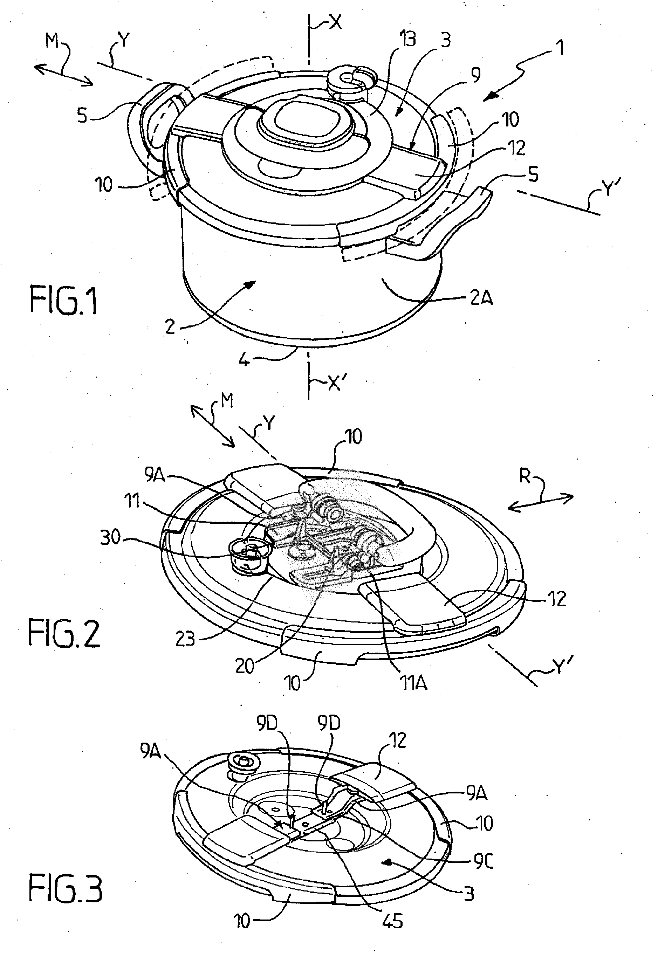

L'appareil 1 de cuisson d'aliments sous pression conforme à l'invention illustré aux figures (en particulier à la figure 1) est destiné à assurer la cuisson d'aliments de toutes natures, légumes, poissons ou viandes notamment, à un niveau de pression supérieur à la pression atmosphérique au sein d'une enceinte de cuisson sensiblement étanche formée par une cuve 2 et un couvercle 3 rapporté sur ladite cuve 2.

L'appareil 1 conforme à l'invention est généralement un appareil à usage domestique, tels qu'un autocuiseur, étant entendu que l'invention peut néanmoins s'appliquer sans sortir de son cadre, à des appareils de type professionnel ou semi-professionnel.

De manière connue, l'appareil 1 conforme à l'invention est avantageusement conçu pour monter en pression sous l'effet d'une source de chauffe embarquée ou externe et est de manière préférentielle un autocuiseur.

De manière également classique, la cuve 2 forme le récipient de cuisson et présente avantageusement une symétrie de révolution selon un axe X-X', cet axe se référant à la direction verticale de l'appareil lorsqu'il est en fonctionnement normal, c'est-à-dire repose sur un plan horizontal. La référence « *axiale* » ainsi définie sera utilisée dans la suite de la description par opposition à la direction « *radiale* », laquelle pourra être une direction radiale interne en direction de l'axe X-X' ou radiale externe en éloignement dudit axe.

La cuve 2 est fabriquée à partir d'un matériau métallique tel que de l'acier inoxydable et est pourvue d'un fond 4, bon conducteur de la chaleur et solidarisé à la cuve 2 par toutes techniques appropriées bien connues de l'homme du métier, et par exemple par frappe à chaud, les parois 2A de la cuve 2 s'élevant sensiblement verticalement à partir dudit fond 4.

Tel qu'illustré à la figure 1, la cuve 2 peut également comporter de manière avantageuse des organes de préhension 5, telles que des poignées, préférentiellement au nombre de deux et fixées par exemple par rivetage ou vissage, ou tous moyens appropriés, sur les parois 2A de la cuve 2, de préférence en position diamétralement opposée.

Le couvercle 3 de l'appareil 1 conforme à l'invention est de forme conjuguée à celle de la cuve 2 de manière à pouvoir être rapporté sur cette dernière pour fermer la cuve 2 de manière sensiblement étanche et former l'enceinte de cuisson.

De manière bien connue, le couvercle 3 est pourvu d'un joint annulaire (non représenté aux figures), par exemple en matériau élastomère, destiné à venir en appui contre le rebord supérieur de la cuve 2 de manière à réaliser une fermeture sensiblement étanche afin de permettre la montée en pression de l'appareil.

Tel qu'illustré aux figures 1 et 2, l'appareil 1 de cuisson est avantageusement un autocuiseur dont la cuve 2 est cylindrique et le couvercle 3, de forme générale discoïde, circulaire, étant entendu qu'au sens de l'invention, l'appareil 1 conforme à l'invention peut être de toute autre forme, en particulier ovale.

Tel qu'illustré aux figures, l'appareil 1 de cuisson d'aliments sous pression conforme à l'invention comporte également un mécanisme de verrouillage 9 monté mobile sur le couvercle 3 et destiné à assurer le verrouillage / déverrouillage du couvercle 3 sur la cuve 2.

Comme indiqué dans la partie introductive de la demande de brevet, les mécanismes de verrouillage sont bien connus de l'homme du métier et peuvent être de différents types.

Dans l'exemple illustré aux figures, le mécanisme de verrouillage 9 comprend à titre purement illustratif et non limitatif, au moins une, et de préférence deux mâchoires de verrouillage 10 montées radialement mobiles sur le couvercle 3 entre une position de verrouillage (figure 1) et une position de déverrouillage (illustrée par un simple trait pointillé sur la figure 1) dans lesquelles les mâchoires 10 sont radialement écartées de la cuve 2 pour que le couvercle 3 puisse être ôté.

Tel qu'illustré, les mâchoires de verrouillage 10 se présentent classiquement sous la forme de segments en arc-de-cercle de section transversale en U de manière à pouvoir venir enserrer, dans leur position de verrouillage, le rebord supérieur de la cuve 2 pour réaliser le verrouillage.

Le mécanisme de verrouillage 9 comprend également des bras entraîneurs 9A reliés par une extrémité à chaque mâchoire 10 et par l'autre extrémité 9C, située vers le centre du couvercle 3, à un verrou 11 de commande monté également en translation sur le couvercle 3, de préférence selon une direction radiale R (laquelle inclut les deux sens de déplacement en direction radiale interne ou radiale externe) qui est orthogonale à la direction radiale de déplacement M des mâchoires 10 (laquelle direction M inclut les deux sens de déplacement en direction radiale interne ou radiale externe). Tel qu'illustré, le verrou 11 peut être formé par une plaque sensiblement plane. Tel qu'illustré également aux figures 1 et 2, la face supérieure du couvercle 3 peut être pourvue d'un habillage, par exemple à base de matériau plastique, comportant par exemple une traverse 12 et un disque central 13 permettant de recouvrir respectivement les bras entraîneurs 9A ainsi que le verrou 11 et les pièces de la liaison cinématique associées.

L'extrémité 9C de chaque bras entraîneurs 9A est pourvue d'un pion 9D destiné à assurer la liaison cinématique avec le verrou 11 de commande en venant s'insérer et se déplacer dans une lumière 11A de guidage ayant une forme appropriée, laquelle lumière 11A est ménagée à travers l'épaisseur du verrou de commande 11. Grâce à ce montage, le déplacement ou l'arrêt du verrou de commande 11 selon la direction R commande, c'est-à-dire déplace ou bloque le déplacement des bras entraineurs 9A et donc des mâchoires 10 selon la direction M. Selon la variante préférentielle illustrée, l'appareil selon l'invention comporte deux lumières 11A symétriques et associées à chaque bras entraineurs 9A.

L'appareil 1 de cuisson d'aliments sous pression comprend également un organe de commande 15 du verrouillage / déverrouillage du couvercle 3 sur la cuve 2 destiné à être actionné manuellement par un utilisateur, ledit organe 15 étant monté mobile à rotation sur le couvercle 3 par l'intermédiaire d'au moins un axe de rotation Y-Y' selon une course s'étendant entre au moins une position de déverrouillage et une position de verrouillage (figures 1), ledit organe de commande 15 étant en liaison cinématique, par l'intermédiaire de moyens d'engagement 20 solidaires de l'axe de rotation Y-Y, avec le mécanisme de verrouillage 9 pour déplacer ledit mécanisme de verrouillage 9 dans des positions de déverrouillage et de verrouillage correspondant à celles de l'organe de commande15 en vue d'assurer le verrouillage/déverrouillage du couvercle 3. Selon cette disposition, l'organe de commande 15 est monté mobile sur le couvercle 3 pour inter agir avec et sur le mécanisme de verrouillage 9 pour le déplacer et assurer le verrouillage / déverrouillage du couvercle 3.

Dans l'exemple préférentiel de réalisation illustré aux figures, l'organe de commande 15 est réalisé sous la forme d'un levier monté à rotation sur le couvercle 3 autour de l'axe de rotation Y-Y' de manière à pouvoir pivoter. Avantageusement, l'organe de commande 15 est monté sensiblement dans la partie centrale du couvercle 3 et à rotation autour d'un axe Y-Y' sensiblement orthogonal à l'axe X-X' de révolution du couvercle 3 et de l'appareil 1. Selon la version préférentielle illustrée aux figures, l'organe de commande 15 est un levier constitué par une arche 16 avec une anse globalement de forme semi-circulaire constituant la partie de préhension laquelle se termine par deux demi-axes 17 servant d'axe de rotation Y-Y' et de liaison avec le couvercle 3.

De cette façon, l'organe de commande 15 est monté à rotation sur le couvercle 3 par l'intermédiaire de l'axe de rotation Y-Y' formé avantageusement de deux demi-axes 17.

Selon la version préférentielle de l'invention illustrée aux figures, l'arche 16 est en liaison cinématique avec les bras entraîneurs 9C par le biais du verrou 11, formé avantageusement par une plaque de commande disposée sous l'arche 16 et montée à translation selon la direction R sur une platine 23 solidaire du couvercle 3.

Selon une caractéristique importante de l'invention, le mécanisme de verrouillage 9 comporte des moyens de réception 30 aptes à coopérer avec les moyens d'engagement 20 de telle manière que lors du déplacement de l'organe de commande 15 de sa position de verrouillage jusqu'à sa position de déverrouillage et inversement, les moyens d'engagement 20 provoquent le déplacement correspondant du mécanisme de verrouillage 9 de sa position de verrouillage jusqu'à sa position de déverrouillage et inversement. De cette façon, le pivotement de l'organe de commande 15 autour de son axe Y-Y' permet aux moyens d'engagement 20 de venir coopérer et de venir engager les moyens de réception 30 dans les deux sens de pivotement, savoir celui correspondant au verrouillage et celui correspondant au déverrouillage de l'appareil.

Selon l'invention, et avantageusement, les moyens d'engagement 20 sont situés au même endroit sur l'organe de commande 15 de sorte à être localisés en une zone unique pour former des moyens d'engagement 20 non disjoints, c'est-à-dire permettant d'assurer à la fois le verrouillage et le déverrouillage.

Le montage proposé permet ainsi de faire exercer la commande complète des opérations de verrouillage/déverrouillage de l'appareil par des moyens d'engagements 20 qui sont situés au même endroit sur une même pièce, à savoir l'organe de commande 15, tandis que les moyens complémentaires, à savoir les moyens de réception 30 qui permettent de réaliser la liaison cinématique au sein du mécanisme de verrouillage 9 sont eux aussi par conséquent situés dans la même zone au niveau de l'axe de rotation Y-Y'.

Selon une version particulièrement avantageuse de l'invention, les moyens d'engagement 20 sont formés par une came 21 montée solidaire de l'axe de rotation Y-Y' vers une extrémité de l'organe de commande 15, par exemple par une bague 22 annulaire entourant l'axe Y-Y'.

Tel qu'illustré, la came 21 est de forme oblongue et s'étend le long et à distance de l'axe de rotation Y-Y'. Plus précisément, la came 21 s'étend à distance de l'axe Y-Y' et est parallèle et de même direction que ledit axe Y-Y' et située à une distance appropriée pour pouvoir venir engager les moyens de réception 30 lors de la rotation de l'organe de commande 15 autour de l'axe Y-Y'.

Selon l'invention, les moyens de réception 30 sont formés par au moins un ergot 31 disposé au voisinage de l'organe de commande 15 de manière à pouvoir être engagé par les moyens d'engagement 20 lors de la rotation de l'organe de commande 15.

De manière particulièrement avantageuse, les moyens de réception 30 comprennent deux ergots 31, 32 respectivement un ergot de verrouillage 31 et un ergot de déverrouillage 32. Ainsi, l'ergot de verrouillage 31 est destiné à être engagé par la came 21 pour assurer le verrouillage de l'appareil alors que l'ergot de déverrouillage 32 est destiné à être engagé par la came 21 lorsque l'organe de commande 15 est mis en rotation dans le sens nécessaire à obtenir le déverrouillage de l'appareil.

En pratique, les ergots 31, 32 forment par exemple des butées verticales s'étendant à partir de la face supérieure du verrou de commande 11, et par exemple venues de matière avec la matière du verrou de commande 11. Ils sont positionnés sur le verrou de commande 11 dans une zone où ils peuvent être engagés par la came 21 lors de la rotation de l'organe de commande 15 autour de son axe de rotation Y-Y'.

Les moyens d'actionnement 20 et de réception 30 effectuent ainsi, lorsqu'ils se déplacent tout en étant en contact respectif, à la fois la commande du verrouillage et du déverrouillage. Etant situés dans une zone précise, c'est-à-dire dans la même zone sur et sous l'organe de commande 15, l'encombrement du système est particulièrement réduit.

Ainsi, selon l'invention le mécanisme de verrouillage 9 comporte un verrou de commande 11 s'étendant sous l'organe de commande 15, en particulier sous l'arche 16, ledit verrou de commande 11 étant monté de manière à pouvoir se déplacer selon une direction radiale R pour assurer le verrouillage/déverrouillage, les ergots 31, 32 étant solidaires du verrou de commande 11 et faisant saillie à partir dudit verrou de commande 11 de manière à pouvoir être engagés par les moyens d'engagement 20, en l'occurrence la came 21.

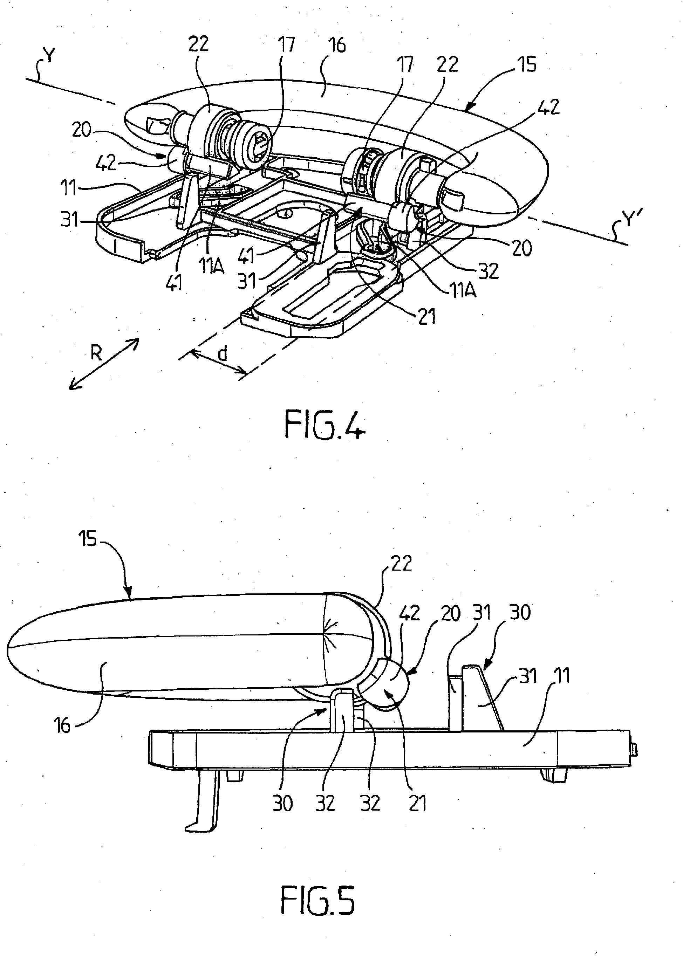

Selon une disposition constructive particulière facilitant la réalisation et diminuant l'encombrement, les ergots 31, 32, en l'occurrence de verrouillage 31 et de déverrouillage 32, sont décalés l'un par rapport à l'autre en considération de la direction radiale R. En effet, tel qu'illustré à la figure 4, l'ergot de verrouillage 31 est décalé d'une distance « *d* » de l'ergot de déverrouillage 32 qui lui est associé. En d'autres termes, les ergots 31, 32 ne sont pas alignés en considération de la direction R selon cette variante préférentielle.

Selon une autre disposition constructive particulière, la came 21 se présente avantageusement sous la forme d'une pièce de forme oblongue présentant au moins deux sections transversales différentes, en l'occurrence une section de dimension inférieure 41 dite de verrouillage, et par exemple de section transversale triangulaire, et une section de dimension supérieure dite de déverrouillage 42, et par exemple circulaire. Selon cette variante, la section de verrouillage 41 est destinée à venir engager l'ergot de verrouillage 31 correspondant, alors que la section de déverrouillage 42 est destinée à venir engager l'ergot de déverrouillage 32 correspondant. Ces particularités constructives permettent d'obtenir un gain de place et une bonne robustesse de l'ensemble.

Dans les versions préférentielles illustrées aux figures, l'arche 16 est articulé sur le couvercle par deux demi-axes 17 parallèles à et de même direction que la direction M de déplacement du mécanisme de verrouillage 9, lequel comprend deux mâchoires de verrouillage 10, chaque demi-axe 17 étant pourvu d'une came 21 d'engagement, chaque came 21 d'engagement étant destinée à venir engager un ergot de verrouillage 31 ou un ergot de déverrouillage 32 selon le sens de rotation de l'arche 16, les ergots de verrouillage 31 et de déverrouillage 32 étant solidaires du verrou de commande 11 lequel est monté d'une part pour se déplacer selon une direction orthogonale à la direction de déplacement M du mécanisme de verrouillage 9 sous l'action de la rotation de l'arche 16 et d'autre part pour transmettre aux mâchoires de verrouillage 10 le déplacement généré par l'action des cames 20 sur les ergots 31, 32.

Le fonctionnement du dispositif est le suivant.

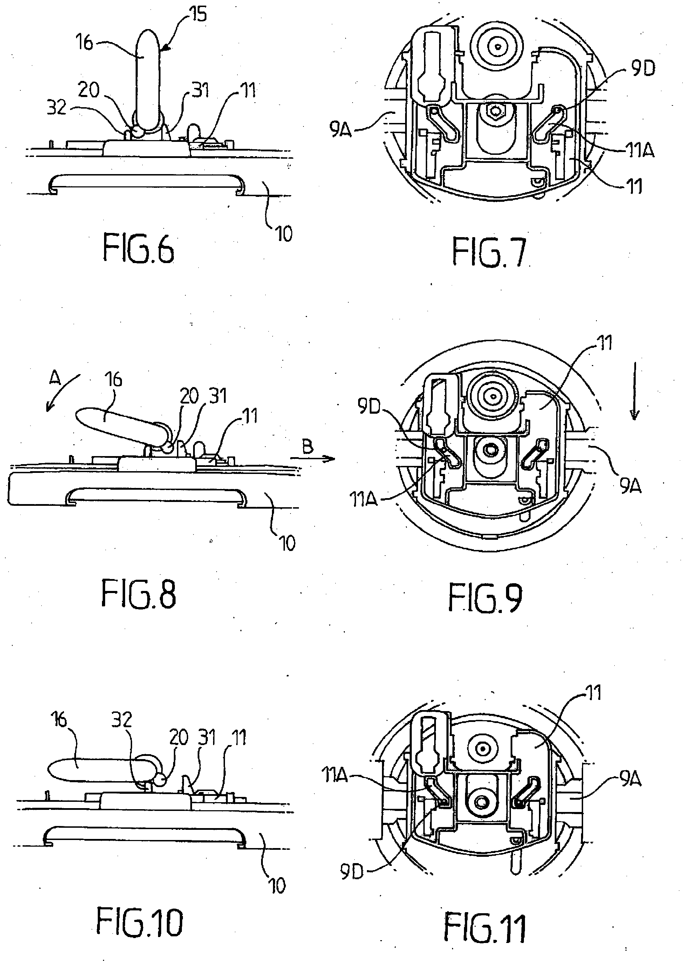

Dans la position de déverrouillage illustré aux figures 6 et 7, l'organe de commande 15, et en l'occurrence l'arche 16 est dans la position de déverrouillage, avantageusement sensiblement verticale, la came 20 étant simplement en appui souple ou lâche contre l'ergot de déverrouillage 32. Sur la figure 7, on observe que les pions 9D des bras entraîneurs 9A sont situés à l'une des extrémités de la lumière de guidage 11A formant un point dur permettant d'obtenir une position stable de déverrouillage à l'encontre de moyens de rappel 45 (figure 3) tel qu'un ressort hélicoïdal, interposé entre les deux extrémités 9C des bras entraîneurs 9A pour assurer une position de rappel des mâchoires 10 vers leur position de verrouillage.

Lorsque l'utilisateur souhaite assurer le verrouillage de l'appareil, il saisit l'arche 16 et la met en rotation selon la flèche A (figure 8). Au cours de la rotation de l'arche 16, et après une course morte, la ou les cames 20 vient ou viennent engager les moyens de réception 30 en l'occurrence les ergots de verrouillage 31 de telle sorte qu'un mouvement de translation selon la flèche B est transmis au verrou de commande 11.

Tel qu'illustré à la figure 9, ce mouvement de translation du verrou de commande 11 se traduit par un début de déplacement des bras entraîneurs 9A et donc des mâchoires associées 10 selon une direction radiale externe, les pions 9D ayant quitté leur position de butée et se trouvant dans une position intermédiaire au sein des lumières de guidage 11A.

Tel qu'illustré à la figure 10, lorsque l'arche 16 atteint sa position de verrouillage, de préférence sensiblement parallèle au plan d'extension moyen du couvercle 3, et étant donc dans une position dite « *rabattue »* la position de verrouillage finale et définitive est atteinte, les moyens de rappel 45 ayant automatiquement et naturellement conduit les mâchoires de verrouillage 10 dans leur position stable de verrouillage, le pion 9D se trouvant dans une position de butée à l'autre extrémité de la lumière de guidage 11A. Dans la position de verrouillage, la came 20 est avantageusement, en position d'appui lâche contre l'ergot de déverrouillage 32.

Si l'utilisateur souhaite déverrouiller l'appareil, il opère à l'inverse de l'opération décrite ci-dessus et bascule, par rotation, l'arche 16 de sa position rabattue vers sa position verticale. Au cours de cette rotation, là ou les cames 20 viennent engager les moyens de réception 30 ce qui génère une translation inverse du verrou de commande 11 selon la direction R de telle sorte que les mâchoires de verrouillage 10 se translatent selon la direction M vers leur position de déverrouillage.

L'invention permet ainsi d'obtenir une commande particulièrement précise, robuste et équilibrée de l'ouverture et de la fermeture de l'appareil, l'ensemble des pièces nécessaires à la commande étant disposé dans une zone réduite centrale et située sous l'organe de commande 15.

## Revendications

1. Appareil (1) de cuisson d'aliments sous pression comprenant :
- une cuve (2) et un couvercle (3) susceptible de fermer la cuve (2) de manière étanche pour former une enceinte de cuisson,
- un organe de commande (15) du verrouillage/déverrouillage du couvercle (3) sur la cuve (2) destiné à être actionné manuellement par un utilisateur, ledit organe (15) étant monté mobile à rotation sur le couvercle (3) par l'intermédiaire d'au moins un axe de rotation selon une course s'étendant entre au moins une position de déverrouillage et une position de verrouillage, ledit organe de commande (15) étant en liaison cinématique, par l'intermédiaire de moyens d'engagement (20) solidaires de l'axe de rotation, avec un mécanisme de verrouillage (9) monté mobile sur le couvercle (3) pour déplacer ledit mécanisme de verrouillage (9) dans des positions de déverrouillage et de verrouillage correspondant à celles de l'organe de commande (15) en vue d'assurer le verrouillage/déverrouillage du couvercle (3), **caractérisé en ce que** :
- le mécanisme de verrouillage (9) comporte des moyens de réception (30) aptes à coopérer avec les moyens d'engagement (20) de telle manière que lors du déplacement de l'organe de commande (15) de sa position de verrouillage jusqu'à sa position de déverrouillage et inversement, les moyens d'engagement (20) provoquent le déplacement correspondant du mécanisme de verrouillage (9) de sa position de verrouillage jusqu'à sa position de déverrouillage et inversement,
- et **en ce que** les moyens d'engagement (20) sont situés au même endroit sur l'organe de commande (15).

2. Appareil (1) selon la revendication 1 caractérisé en ce les moyens d'engagement (20) sont formés par une came (21) montée solidaire de l'axe de rotation (Y-Y') vers une extrémité de l'organe de commande (15).

3. Appareil (1) selon la revendication 2 **caractérisé en ce que** la came (21) s'étend le long et à distance de l'axe de rotation (Y-Y').

4. Appareil (1) selon l'une des revendications 1 à 3 **caractérisé en ce que** les moyens de réception (30) sont formés par au moins un ergot (31) disposé au voisinage de l'organe de commande (15) de manière à pouvoir être engagé par les moyens d'engagement (20) lors de la rotation de l'organe de commande (15).

5. Appareil (1) selon la revendication 4 **caractérisé en ce que** les moyens de réception (30) comprennent deux ergots (31, 32), respectivement un ergot de verrouillage (31) et un ergot de déverrouillage (32).

6. Appareil (1) selon les revendications 4 ou 5 **caractérisé en ce que** le mécanisme de verrouillage (9) comporte un verrou de commande (11) s'étendant sous l'organe de commande (15) et monté de manière à pouvoir se déplacer selon une direction radiale pour assurer le verrouillage /déverrouillage, les ergots (31, 32) étant solidaires du verrou de commande (11) et faisant saillie à partir dudit verrou de commande (11) de manière à pouvoir être engagés par les moyens d'engagement.

7. Appareil (1) selon les revendications 5 et 6 **caractérisé en ce que** les ergots de verrouillage (31) et de déverrouillage (32) sont décalés l'un par rapport à l'autre en considération de la direction radiale R.

8. Appareil (1) selon l'une des revendications précédentes **caractérisé en ce que** l'organe de commande (15) est un levier.

9. Appareil (1) selon la revendication 8 **caractérisé en ce que** le levier est une arche (16).

10. Appareil (1) selon la revendication 9 **caractérisé en ce que** l'arche (16) est articulée sur le couvercle (3) par deux demi axes (17) parallèles à l'axe de déplacement du mécanisme de verrouillage (9) comprenant deux mâchoires de verrouillage (10), chaque demi axe (17) étant pourvu d'une came d'engagement (20), chaque came d'engagement (20) étant destinée à venir engager un ergot de verrouillage (31) ou un ergot de déverrouillage (32) selon le sens de rotation de l'arche (16), les ergots de verrouillage (31 et de déverrouillage (32) étant solidaire du verrou de commande (11) lequel est monté d'une part pour se déplacer selon une direction orthogonale à la direction de déplacement M du mécanisme de verrouillage (9) sous l'action de la rotation de l'arche (16) et d'autre part pour transmettre aux mâchoires de verrouillage (10) le déplacement généré par l'action des cames (21) sur les ergots.

11. Appareil (1) selon l'une des revendications précédentes **caractérisé en ce que** l'appareil (1) est un autocuiseur à usage domestique.

## Patentansprüche

1. Druckkochgerät (1), umfassend:
- einen Behälter (2) und einen Deckel (3), der geeignet ist, den Behälter (2) dicht zu verschließen, um einen Kochraum zu bilden,
- ein Steuerelement (15) zur Verriegelung/Entriegelung des Deckels (3) auf dem Behälter (2), das dazu dient, manuell von einem Benutzer bedient zu werden, wobei das Element (15) durch mindestens eine Rotationsachse gemäß einem Hubbereich, der sich zwischen mindestens einer Entriegelungsposition und einer Verriegelungsposition erstreckt, drehbeweglich auf dem Deckel (3) gelagert ist, wobei das Steuerelement (15) über Eingriffsmittel (20), die fest mit der Rotationsachse verbunden sind, mit einem Verriegelungsmechanismus (9), der beweglich auf dem Deckel (3) angebracht ist, um den Verriegelungsmechanismus (9) in Entriegelungs- und Verriegelungspositionen zu verschieben, die denen des Steuerelements (15) entsprechen, in kinematischer Verbindung steht, um die Verriegelung/Entriegelung des Deckels (3) zu gewährleisten, **dadurch gekennzeichnet, dass**:
- der Verriegelungsmechanismus (9) Aufnahmemittel (30) aufweist, die geeignet sind, mit den Eingriffsmitteln (20) so zusammenzuwirken, dass bei der Verschiebung des Steuerelements (15) von seiner Verriegelungsposition in seine Entriegelungsposition und umgekehrt die Eingriffsmittel (20) die entsprechende Verschiebung des Verriegelungsmechanismus (9) aus seiner Verriegelungsposition in seine Entriegelungsposition und umgekehrt hervorrufen,
- und dass die Eingriffsmittel (20) sich an demselben Platz auf dem Steuerelement (15) befinden.

2. Gerät (1) nach Anspruch 1, **dadurch gekennzeichnet, dass** die Eingriffsmittel (20) durch einen Nocken (21) gebildet sind, der starr mit der Rotationsachse (Y-Y') zu einem Ende des Steuerelements (15) hin angebracht ist.

3. Gerät (1) nach Anspruch 2, **dadurch gekennzeichnet, dass** der Nocken (21) sich entlang und in Abstand von der Rotationsachse (Y-Y') erstreckt.

4. Gerät (1) nach einem der Ansprüche 1 bis 3, **dadurch gekennzeichnet, dass** die Aufnahmemittel (30) durch mindestens einen Zapfen (31) gebildet sind, der in der Nähe des Steuerelements (15) angeordnet ist, um von den Eingriffsmitteln (20) bei der Rotation des Steuerelements (15) in Eingriff gebracht werden zu können.

5. Gerät (1) nach Anspruch 4, **dadurch gekennzeichnet, dass** die Aufnahmemittel (30) zwei Zapfen (31, 32) beziehungsweise einen Verriegelungszapfen (31) und einen Entriegelungszapfen (32) aufweisen.

6. Gerät (1) nach Anspruch 4 oder 5, **dadurch gekennzeichnet, dass** der Verriegelungsmechanismus (9) einen Steuerriegel (11) aufweist, der sich unter dem Steuerelement (15) erstreckt und der so angebracht ist, dass er sich in einer radialen Richtung verschieben kann, um die Verriegelung/Entriegelung zu gewährleisten, wobei die Zapfen (31, 32) fest mit dem Steuerriegel (11) verbunden sind und von dem Steuerriegel (11) hervorstehen, so dass sie von den Eingriffsmitteln in Eingriff gebracht werden können.

7. Gerät (1) nach Anspruch 5 und 6, **dadurch gekennzeichnet, dass** die Verriegelungs (31) und Entriegelungszapfen (32) zueinander versetzt sind unter Berücksichtigung der radialen Richtung R.

8. Gerät (1) nach einem der vorhergehenden Ansprüche, **dadurch gekennzeichnet, dass** das Steuerelement (15) ein Hebel ist.

9. Gerät (1) nach Anspruch 8, **dadurch gekennzeichnet, dass** der Hebel ein Bogen (16) ist.

10. Gerät (1) nach Anspruch 9, **dadurch gekennzeichnet, dass** der Bogen (16) auf dem Deckel (3) durch zwei Halbachsen (17) gelenkig verbunden ist, die parallel zu der Verschiebungsachse des Verriegelungsmechanismus (9) verlaufen, der zwei Verriegelungsbacken (10) aufweist, wobei jede Halbachse (17) mit einem Eingriffsnocken (20) versehen ist, wobei jeder Eingriffsnocken (20) dazu dient, einen Verriegelungszapfen (31) oder einen Entriegelungszapfen (32) in der Rotationsrichtung des Bogens (16) in Eingriff zu bringen, wobei die Verriegelungs (31) und Entriegelungszapfen (32) fest mit dem Steuerriegel (11) verbunden sind, welcher einerseits angebracht ist, um sich in einer Richtung zu verschieben, die rechtwinklig zu der Verschiebungsrichtung M des Verriegelungsmechanismus (9) unter der Einwirkung der Rotation des Bogens (16) verläuft, und andererseits, um die Verschiebung an die Verriegelungsbacken (10) zu übertragen, die durch die Bewegung der Nocken (21) auf die Zapfen erzeugt wird.

11. Gerät (1) nach einem der vorhergehenden Ansprüche, **dadurch gekennzeichnet, dass** das Gerät (1) ein Schnellkochtopf für den Gebrauch im Haushalt ist.

## Claims

1. A food pressure-cooking appliance (1) comprising:
- a bowl (2) and a lid (3) adapted to tightly close the bowl (2) to form a cooking chamber,
- a member (15) for controlling the locking / unlocking of the lid (3) on the bowl (2), intended to be manually operated by a user, said member (15) being mounted movable for rotation on the lid (3) through at least one axis of rotation, along a stroke extending between at least one unlocking position and one locking position, said control member (15) being kinematically linked, through engagement means (20) integral with the axis of rotation, to a locking mechanism (9) mounted movable on the lid (3) to displace said locking mechanism (9) in unlocking and locking positions corresponding to those of the control member (15), in order to ensure the locking / unlocking of the lid (3), **characterized in that**:
- the locking mechanism (9) includes reception means (30) adapted to cooperate with engagement means (20) in such a manner that, during the displacement of the control member (15) from its locking position to its unlocking position, and the reverse, the engagement means (20) cause the corresponding displacement of the locking mechanism (9) from its locking position to its unlocking position, and the reverse.
- and **in that** the engagement means (20) are located at the same place on the control member (15).

2. The appliance (1) according to claim 1, **characterized in that** the engagement means (20) are formed by a cam (21) mounted integral with the axis of rotation (Y-Y'), toward an end of the control member (15).

3. The appliance (1) according to claim 2, **characterized in that** the cam (21) extends along and remote from the axis of rotation (Y-Y').

4. The appliance (1) according to one of claims 1 to 3, **characterized in that** the reception means (30) are formed by at least one lug (31) arranged in the vicinity of the control member (15) so that it can be engaged by the engagement means (20) during the rotation of the control member (15).

5. The appliance (1) according to claim 4, **characterized in that** the reception means (30) comprise two lugs (31, 32), a locking lug (31) and an unlocking lug (32), respectively.

6. The appliance (1) according to claims 4 or 5, **characterized in that** the locking mechanism (9) includes a control lock (11) extending under the control member (15) and mounted such that it can move along a radial direction to ensure the locking / unlocking, the lugs (31, 32) being integral with the control lock (11) and protruding from said control lock (11) so that they can be engaged by the engagement means.

7. The appliance (1) according to claims 5 and 6, **characterized in that** the locking lug (31) and unlocking lug (32) are offset relative to each other with respect to the radial direction R.

8. The appliance (1) according to one of the preceding claims, **characterized in that** the control member (15) is a lever.

9. The appliance (1) according to claim 8, **characterized in that** the lever is an arch (16).

10. The appliance (1) according to claim 9, **characterized in that** the arch (16) is articulated on the lid (3) by two half-axes (17) parallel to the axis of displacement of the locking mechanism (9) comprising two locking jaws (10), each half-axis (17) being provided with an engagement cam (20), each engagement cam (20) being intended to engage with a locking lug (31) or an unlocking lug (32), according to the direction of rotation of the arch (16), the locking lug (31) and unlocking lug (32) being integral with the control lock (11), which is mounted, on the one hand, so as to move along a direction orthogonal to the direction of displacement M of the locking mechanism (9), under the action of the rotation of the arch (16), and on the other hand, to impart to the locking jaws (10) the displacement generated by the action of the cams (21) on the lugs.

11. The appliance (1) according to one of the preceding claims, **characterized in that** the appliance (1) is a household pressure-cooker.
